# EUROPÄISCHE PATENTSCHRIFT

(11) **EP 2 923 074 B1**
(45) Veröffentlichungstag und Bekanntmachung des Hinweises auf die Patenterteilung: **30.11.2016**
(21) Anmeldenummer: 13742470.1
(22) Anmeldetag: 01.08.2013
(51) Int. Cl.: F03B 3/12, F03B 11/00, F03B 3/06, F03B 3/14

(54) **LAUFRAD EINER KAPLANTURBINE**
IMPELLER FOR A KAPLAN TURBINE
ROTOR D'UNE TURBINE DE KAPLAN

(30) Priorität: 20.11.2012 DE 102012022583
(43) Veröffentlichungstag der Anmeldung: 30.09.2015
(73) Patentinhaber: Voith Patent GmbH, 89522 Heidenheim (DE)
(72) Erfinder: SNYDER, Gregory, York, Pennsylvania 17042 (US); STINSON, Franklin, York, Pennsylvania 17408 (US); NEIDHARDT, Thomas, 89520 Heidenheim (DE)
(74) Vertreter: Dr. Weitzel & Partner
(86) Internationale Anmeldenummer: PCT/EP2013/066142
(87) Internationale Veröffentlichungsnummer: WO 2014/079596

(56) Entgegenhaltungen:
- WO-A1-2006/000519
- SU-A1- 438 037
- US-A- 2 070 601
- US-A- 2 085 909

## Beschreibung

Die Erfindung betrifft Kaplanturbinen. Siehe beispielsweise DE 101 00 963 A1. und US 2070601

Eine solche Kaplanturbine weist als wesentliche Teile ein Laufrad, ein Leitrad sowie ein Gehäuse auf. Das Laufrad ist mit verstellbaren Laufschaufeln versehen und ist mit der Welle gekuppelt.

Es gibt Kaplanturbinen mit vertikaler Welle, aber auch solche mit horizontaler Welle.

Es ist ein besonders interessanter Anwendungsfall von Kaplanturbinen mit horizontaler Welle bekannt geworden. Hierbei wird ein Staudamm oder eine Wehr-Schütze, beispielsweise in einem Flusskraftwerk, mit einer großen Anzahl von Kaplanturbinen bestückt, beispielsweise mit 6, 12, 24 oder noch mehr Turbinen. Die einzelne Kaplanturbine ist hierbei naturgemäß sehr klein. Sie lässt sich bei Auftreten eines Schadens leicht und rasch ausbauen und gegen eine neue Turbine austauschen. Dabei ist man bestrebt, den Aufbau der Turbine möglichst einfach zu halten. Siehe zum Beispiel US 5 825 094.

Die genannten Verstelleinrichtungen sind relativ aufwändig in ihrer Konstruktion. Ihre einwandfreie Funktion ist für die Arbeitsweise der gesamten Turbine äußerst wichtig. Die bewegten Teile müssen geschmiert werden, Es ist bekannt, hierzu Öl oder Wasser zu verwenden. Zu diesem Zwecke wird der Innenraum der Nabe mit Wasser oder mit Öl gefüllt. Verwendet man Wasser, so besteht Korrosionsgefahr. Verwendet man Öl, so kann dies zu einer Umweltverschmutzung führen, wenn die Nabe Undichtigkeiten aufweist.

Der Erfindung liegt die Aufgabe zugrunde, eine Kaplanturbine derart zu gestalten, dass weder Korrosion noch Umweltverschmutzung auftritt. Diese Aufgabe wird durch die Merkmale von Anspruch 1 gelöst.

Demgemäß wird die Nabe mit einem Anschluss zum Einleiten von Druckluft in den hohlen Innenraum versehen. Der Innenraum steht somit beim Betrieb der Turbine unter einem Überdruck. Damit lassen sich jegliche bewegten Teile mittels Druckluft versorgen. Die Druckluft ersetzt eine Schmierung durch Öl oder durch Wasser. Dabei werden zweckmäßigerweise selbstschmierende Dicht- und Lagerwerkstoffe statt ölgeschmierte oder wassergeschmierte Lager und Dichtungen verwendet.

Die Erfindung ist besonders gut geeignet für die Umrüstung von existierenden Turbinen auf wasser- oder ölfreien Betrieb.

Darüber hinaus hat die Erfindung den folgenden Vorteil: Druckluft kann von der Nabe durch die Schaufeln einer Anti-Kavitations-Rippe zugeführt werden. Damit lässt sich die Kavitationsgefahr verringern. Auch wird vermieden, dass Wasser in den Innenraum eintritt.

Konventionelle Turbinen mit Öl beschmierten Lagern lassen sich im Sinne der Erfindung leicht umrüsten. Man kann nämlich existierende Leitungen zum Heranführen von Schmieröl zu den Lagern als Luftleitungen verwenden.

Der Stand der Technik sowie die Erfindung sind anhand der Zeichnung näher erläutert.

Darin ist im Einzelnen folgendes dargestellt:
- Figur 1: zeigt eine Kaplanturbine gemäß dem Stand der Technik im Aufriss und teilweise im Schnitt, mit verstellbaren Schaufeln.
- Figur 2: zeigt eine Rohrturbine gemäß dem Stand der Technik in einem Axialschnitt.
- Figur 3: zeigt ein Kaplan-Laufrad gemäß dem Stand der Technik in einer Welle und einer inneren Laufschaufel-Verstelleinheit.
- Figur 4: zeigt in schematischer Darstellung eine Kaplanturbine gemäß dem Stand der Technik mit einer öl- oder wassergefüllten Nabe.
- Figur 5: zeigt eine Kaplanturbine in einer Darstellung analog jener gemäß Figur 4, aber mit einer druckluftgefüllten Nabe.

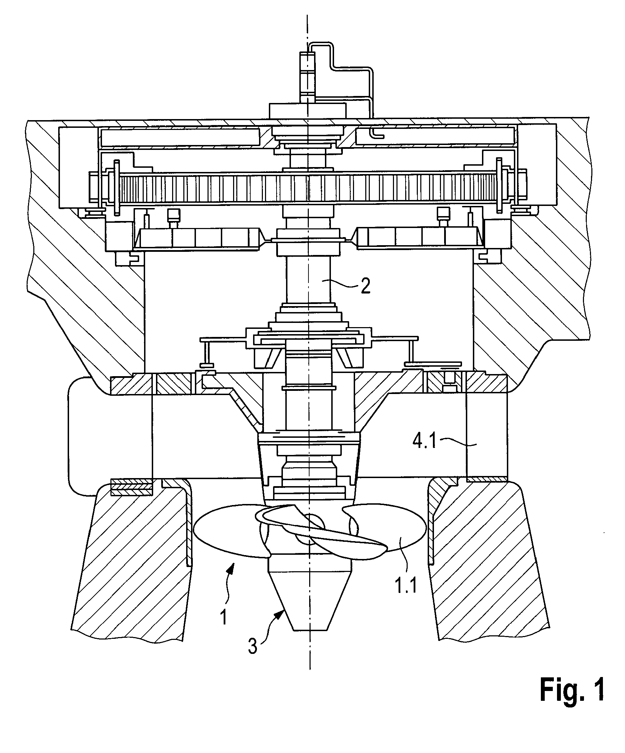

Die in Figur 1 gezeigte Kaplanturbine weist ein Laufrad 1 auf, das von einer Welle 2 getragen ist. Die Welle 2 ist vertikal angeordnet. Das Laufwerk weist verstellbare Laufschaufeln 1.1 auf.

Die Welle weist an ihrem freien Ende eine Nabe 3 auf. Es ist ferner ein Leitschaufelkranz 4 vorgesehen. Dieser ist in der Nabe 3 gelagert. Die Leitschaufeln 4.1 sind ebenfalls verstellbar.

Zum Verstellen dient eine erfindungsgemäße Verstelleinheit, bei welcher eine Verstellkraft aufgebracht wird, die proportional der Fallhöhe ist.

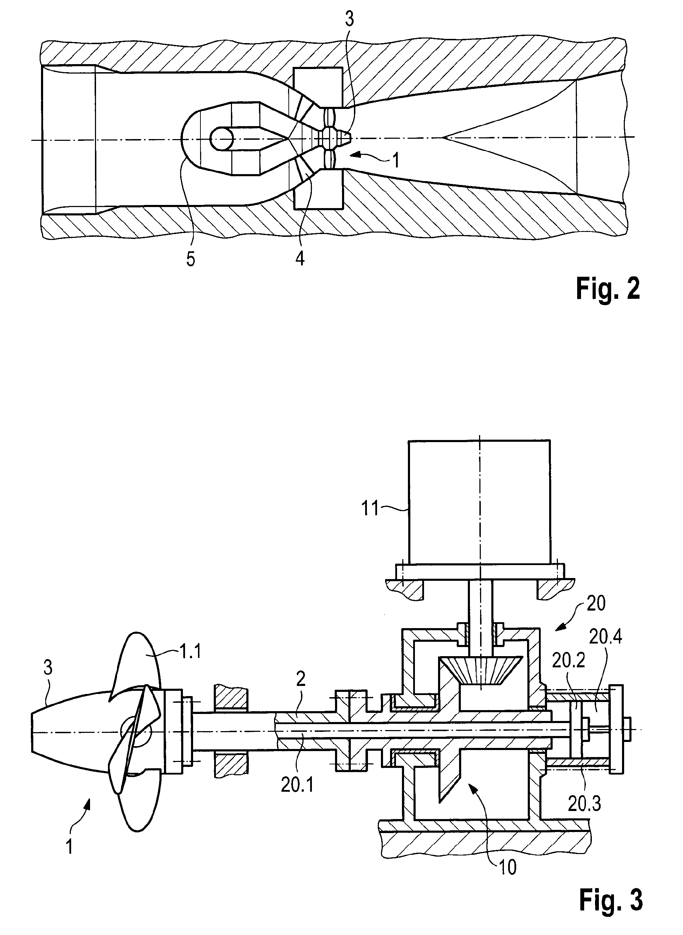

Die in Figur 2 dargestellte Kaplanturbine ist eine Rohrturbine mit horizontaler Welle. Auch hier ist wiederum eine Nabe 3 erkennbar. Die Turbine weist wiederum die gleichen Bauteile auf, wie jene gemäß Figur 1. Man erkennt ein Laufrad 1, ferner einen Leitschaufelkranz 4.

Es ist ein Gehäuse 5 vorgesehen, das einen Generator umschließt. Der Generator sitzt auf der Welle des Laufrades 1.

Auch hier ist eine Verstelleinheit ähnlich jener gemäß Figur 1 vorgesehen. Die Verstelleinheit befindet sich im Gehäuse 5 und erstreckt sich bis zur Nabe 3.

Figur 3 zeigt eine Verstelleinheit, die in den Ausführungsbeispielen der Figuren 1 und 2 verwendet werden kann. Man erkennt auch hierbei wiederum ein Laufrad 1 mit Laufschaufeln 1.1. Das Laufrad 1 ist von einer Nabe 3 getragen. Ein Kegelradgetriebe 10 überträgt Drehmoment, das am Laufrad 1 erzeugt wird, auf einen Generator 11.

Die Verstelleinheit 20 umfasst eine Schubstange 20.1. Das stromabwärtige Ende der Schubstange 20.1 ist hier nicht erkennbar. Es ist jedoch durch die hohle Welle 2 bis zum Laufrad hindurchgeführt. Dort greift es an den verstellbaren Laufschaufeln 1.1 derart an, dass ein Verschieben der Schubstange 20.1 in axialer Richtung ein Verstellen der Schaufeln 1.1 bewirkt.

Das stromaufwärtige Ende der Schubstange 20.1 trägt eine Platte 20.2. Diese ist in einem Zylinder 20.3 angeordnet und darin nach Art eines Kolbens axial verfahrbar. Der Hubraum 20.4 rechts der Platte 20.2 ist mit einem Druck beaufschlagbar, der gleich oder proportional der Fallhöhe ist. Steigt die Fallhöhe an, so steigt auch der Druck im Hubraum 20.4 an. Hierdurch wird die Schubstange 20.1 zum Laufrad 1 hin verschoben, wodurch die Laufschaufeln 1.1 im Sinne eines Schließens verschwenkt oder verstellt werden.

Nimmt die Fallhöhe ab, so wandert die Schubstange wieder in entgegengesetzter Richtung zurück mit der Tendenz des Öffnens der Laufschaufeln 1.1. Diese Rückholbewegung kann auf unterschiedliche Weise eingeleitet werden, beispielsweise durch eine hier nicht dargestellt Rückholfeder. Auch kann in jenem Teil des Zylinderraumes, der sich auf der dem Hubraum 20.4 gegenüberliegenden Seite der Platte 20.2 befindet, ein Gasdruck herrschen.

Bei der in Figur 3 gezeigten bekannten Ausführungsform könnte man von einem inneren Verstellgetriebe sprechen.

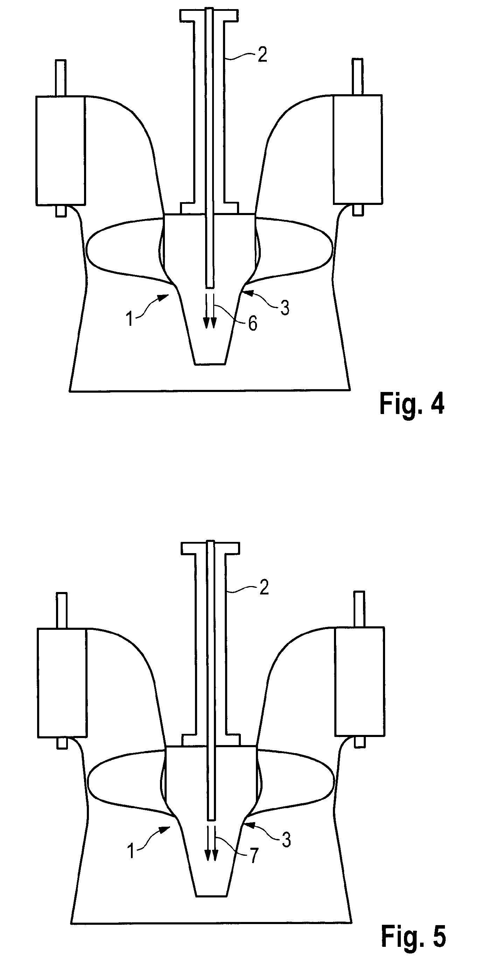

Die in Figur 4 gezeigte bekannte Kaplanturbine umfasst wiederum ein Laufrad 1, eine Welle 2 sowie eine das Laufrad tragende Nabe 3. Die Welle ist hohl. Während des Betriebes wird der Nabe 3 Öl zugeführt. Siehe den Ölauslass.

Bei der Kaplanturbine gemäß Figur 5 ist die Erfindung verwirklicht. Hierbei wird dem Innenraum der Nabe 3 Druckluft zugeführt. Siehe den Druckluftauslass 7.

### Bezugszeichenliste

- 1: Laufrad
- 1.1: Laufschaufeln
- 2: Welle
- 3: Nabe
- 4: Leitschaufelkranz
- 4.1: Leitschaufeln
- 5: Gehäuse
- 6: Ölauslaß
- 7: Druckluftauslaß
- 10: Kegelradgetriebe
- 11: Generator
- 20: Verstelleinheit
- 20.1: Schubstange
- 20.2: Platte
- 20.3: Zylinder
- 20.4: Hubraum

## Patentansprüche

1. Laufrad (1) einer Kaplanturbine, umfassend die folgenden Merkmale beziehungsweise Bauteile:
1.1 eine Welle (2);
1.2 eine Anzahl von Schaufeln (1.1);
1.3 eine hohle Nabe (3), die sich am freien Ende der Welle (2) befindet und die Schaufeln (1.1) trägt;
1.4 eine Verstelleinrichtung (20) zum Verdrehen der Schaufeln um Drehachsen senkrecht zur Drehachse der Welle (2); **gekennzeichnet durch** die folgenden Merkmale:
1.5 Lager oder andere Schmierstellen der Verstelleinrichtung (20) sind frei von Schmieröl;
1.6 der Innenraum der Nabe (3) ist an eine Druckluftquelle angeschlossen;
1.7 es sind im Inneren der Nabe (3) Zweigleitungen zum Zuführen der Druckluft zu Lagern oder anderen Schmierstellen der Verstelleinrichtung (20) vorgesehen;
1.8 die Anordnung ist derart getroffen, dass der Innenraum der Nabe (3) unter Überdruck steht.

2. Laufrad (1) nach Anspruch 1, **dadurch gekennzeichnet, dass** die Verstelleinrichtung (20) einer jeden Schaufel einen Kolben-Zylinder-Aktuator umfasst, der ebenfalls an die Druckluftquelle angeschlossen ist.

3. Laufrad (1) nach Anspruch 1, **dadurch gekennzeichnet, dass** die einzelne Verstelleinrichtung (20) ein parallel zur Drehachse der Welle (2) verschiebbares Gestänge sowie einen Zahntrieb zum Umsetzen der Verschiebebewegung in die Drehbewegung des Laufrades (1) aufweist.

## Claims

1. A blade wheel (1) of a Kaplan turbine, comprising the following features or components:
1.1 a shaft (2);
1.2 a number of blades (1.1);
1.3 a hollow hub (3) which is situated at the free end of the shaft (2) and carries the blades (1.1);
1.4 an adjusting device (20) for twisting the blades about rotational axes perpendicularly to the rotational axis of the shaft (2);
**characterized by** the following features:
1.5 the bearing as well as further points to be lubricated are free of lubricating oil;
1.6 the interior space of the hub (3) is connected to a compressed-air source;
1.7 branch lines for supplying the compressed air to bearings or other lubricating points of the adjusting device (20) are provided in the interior of the hub (3).
1.8 arrangement are provided so that the interior of the hub (3) are super atmospheric pressure.

2. A blade wheel (1) according to claim 1, **characterized in that** the adjusting device (20) of each blade comprises a piston-cylinder actuator which is also connected to the compressed-air source.

3. A blade wheel (1) according to claim 1, **characterized in that** the individual adjusting device (20) comprises a rod assembly which is displaceable parallel to the rotational axis of the shaft (2) and a pinion gear for converting the displacing movement into a rotational movement of the blade wheel (1).

## Revendications

1. Roue mobile (1) d'une turbine Kaplan, possédant les caractéristiques ou composants suivants :
1.1 un arbre (2) ;
1.2 un certain nombre d'aubes (1.1) ;
1.3 un moyeu creux (3) qui se trouve à l'extrémité libre de l'arbre (2) et qui porte les aubes (1.1) ;
1.4 un dispositif d'ajustement (20) destiné à faire pivoter les pales autour d'axes de rotation perpendiculaires à l'axe de rotation de l'arbre (2) ;
**caractérisée en ce que**
1.5 les paliers ou autres points de lubrification du dispositif d'ajustement (20) ne contiennent pas d'huile de lubrification ;
1.6 l'espace intérieur du moyeu (3) est raccordé à une source d'air comprimé ;
1.7 il est prévu à l'intérieur du moyeu (3) des conduites ramifiées amenant l'air comprimé aux paliers ou autres points de lubrification du dispositif d'ajustement (20) ;
1.8 la disposition est telle que l'espace intérieur du moyeu (3) se trouve sous surpression.

2. Roue mobile (1) selon la revendication 1, **caractérisée en ce que** le dispositif d'ajustement (20) de chaque aube comprend un actionneur à vérin qui est également raccordé à la source d'air comprimé.

3. Roue mobile (1) selon la revendication 1, **caractérisée en ce que** chaque dispositif d'ajustement (20) présente une tringle capable de translation parallèlement à l'axe de rotation de l'arbre (2) ainsi qu'un engrenage pour transformer le mouvement de translation en mouvement de rotation de la roue (1).
